# FASCICULE DE BREVET EUROPEEN

(11) **EP 3 032 129 B1**
(45) Date de publication et mention de la délivrance du brevet: **25.03.2020**
(21) Numéro de dépôt: 15195046.6
(22) Date de dépôt: 17.11.2015
(51) Int. Cl.: F16D 65/44, F16D 65/54, F16D 65/74, B64C 25/42, F16D 55/40, F16D 65/18

(54) **ACTIONNEUR DE FREINAGE POUR FREIN HYDRAULIQUE DE ROUE D`AÉRONEF**
BREMSAKTUATOR FÜR HYDRAULISCHE RADBREMSE EINES LUFTFAHRZEUGS
BRAKE ACTUATOR FOIR AIRCRAFT WHEEL HYDRAULIC BRAKE

(30) Priorité: 12.12.2014 FR 1462376
(43) Date de publication de la demande: 15.06.2016
(73) Titulaire: Safran Landing Systems, 78140 Vélizy-Villacoublay (FR)
(72) Inventeur: ROBIN, Jean-Baptiste, 78140 VELIZY-VILLACOUBLAY (FR); LUCIENNE, Robin, 78140 VELIZY-VILLACOUBLAY (FR)
(74) Mandataire: Lavialle, Bruno François Stéphane

(56) Documents cités:
- EP-A1- 2 868 944
- FR-A1- 2 820 794
- US-A1- 2012 125 723

## Description

Les freins hydrauliques utilisés pour freiner les roues des aéronefs comprennent généralement une couronne présentant des multiples cavités dans lesquels des actionneurs de freinage sont rapportés de manière amovible. Chacun des actionneurs comprend une chemise qui est rapportée à étanchéité dans l'une des cavités de la couronne et dans laquelle un piston est monté à coulissement étanche selon un axe de coulissement. La couronne distribue du fluide hydraulique sous pression à toutes ses cavités, fluide qui agit sur le piston pour le faire sortir et appliquer un effort de freinage sur des éléments de friction s'étendant en regard de la couronne, dont des rotors qui tournent avec la roue, et des stators qui sont immobiles en rotation.

Le piston présente en général une course opérationnelle qu'il parcourt lors de l'application d'un effort de freinage. Cette course opérationnelle, de l'ordre de quelques millimètres, est suffisante pour permettre l'application de l'effort de freinage sur les éléments de friction, et le recul du poussoir de façon à permettre la libre rotation des rotors. A cet effet, un ressort s'étendant à l'intérieur du piston assure le recul du poussoir jusqu'à une position de retrait lorsque l'effort de freinage n'est plus appliqué.

Cependant, les éléments de friction s'usant progressivement à la suite de l'application répétée d'efforts de freinage, il importe de faire en sorte que le piston se trouve toujours à proximité des éléments de friction. Pour ce faire, il est connu d'équiper les actionneurs de freinage d'un dispositif de rattrapage d'usure qui s'étend à l'intérieur du piston. Le dispositif de rattrapage d'usure comprend une butée mobile qui est montée coulissante avec friction selon l'axe de coulissement sur une tige centrale s'étendant dans le piston et qui définit la position de retrait du piston.

Lors de l'application d'un effort de freinage, le piston est poussé vers les éléments de friction et, le cas échéant, entraîne la butée mobile avec lui en vainquant la friction entre la tige et la butée, ce qui provoque l'avancement de la butée mobile sur la tige centrale. Lorsque l'effort est relâché, le ressort, qui s'étend entre la butée mobile et le piston, fait reculer le piston jusqu'à la nouvelle position de retrait, qui a avancé du fait de l'avancée de la butée mobile.

On connaît du document FR2820794 un actionneur de freinage illustré à la figure 6B dans lequel le dispositif de rattrapage d'usure comprend une butée mobile (182,184) dont l'organe de friction (les bagues de frottement 182) agit directement sur la paroi de la chemise.

### OBJET DE L'INVENTION

L'invention a pour objet de proposer un actionneur de freinage pour frein hydraulique d'aéronef de structure simplifiée.

### PRESENTATION DE L'INVENTION

En vue de la réalisation de ce but, on propose un actionneur de freinage pour frein hydraulique d'aéronef, destiné à être reçu dans l'une des cavités d'une couronne du frein, l'actionneur comprenant
- une chemise adaptée à être reçue à étanchéité dans la cavité de la couronne ;
- un piston monté à coulissement étanche dans la chemise selon un axe de coulissement pour appliquer un effort de freinage lors de l'introduction d'un fluide sous pression dans la cavité ;
- un dispositif de rattrapage d'usure qui définit une position de retrait du piston dans la chemise au moyen d' une butée mobile pouvant être avancée par le piston lors de l'application d'un effort de freinage ;
- un organe élastique de rappel du piston vers la position de retrait prenant appui sur la butée mobile ; dans lequel, selon l'invention, la butée mobile est réduite à un organe de friction frottant contre la chemise, de sorte que l'une des faces de l'organe de friction sert de butée définissant la position de retrait du piston, et l'autre des faces sert d'appui à l'organe élastique de rappel, l'organe élastique présentant lors de sa compression une augmentation d'effort suffisante pour pouvoir repousser la butée mobile au cas où le piston ne touche pas les éléments de friction alors que sa course opérationnelle est déjà consommée.

Ainsi, la butée mobile est réduite à sa plus simple expression, l'organe de friction formant d'un côté la butée mobile qui arrête le piston dans la position de retrait, et de l'autre côté un appui pour l'organe élastique de rappel qui agit donc directement sur l'organe de friction. L'actionneur de l'invention présente donc une structure très simplifiée.

Tout type d'organe élastique pourra être utilisé, du moment qu'il présente lors de sa compression une augmentation d'effort suffisante pour pouvoir repousser la butée mobile au cas où le piston n'aurait pas touché les éléments de friction alors que sa course utile est déjà consommée. En particulier, et selon un aspect particulier de l'invention, l'organe élastique est un ressort élastique dont les spires peuvent devenir jointive sous l'effort appliqué par le fluide sous pression. Ainsi compacté, le ressort hélicoïdal se comporte comme un solide indéformable capable de pousser la butée mobile.

### BREVE DESCRIPTION DES FIGURES

L'invention sera mieux comprise à la lumière de la description qui suit en référence aux figures des dessins annexés, parmi lesquelles :
- la figure 1 est une vue en coupe d'un actionneur de freinage selon l'invention illustré en place dans une couronne d'un frein hydraulique d'aéronef au repos ;
- la figure 2 est une figure analogue à la figure 1, l'actionneur étant illustré lors de l'application d'un effort de freinage standard, la course opérationnelle du piston n'étant pas entièrement consommée ;
- la figure 3 est une figure analogue à la figure 2, l'actionneur étant illustré lors de l'application d'un effort de freinage, la course opérationnelle du piston étant entièrement consommée avant que le piston n'arrive au contact des disques ;
- la figure 4 est une figure analogue à la figure 3, illustrant l'avancement de la butée mobile pour permettre au piston de venir au contact des disques
- la figure 5 est une figure analogue à la figure 4, l'actionneur étant illustré après relâchement de l'effort de freinage.

### DESCRIPTION DETAILLEE DE L'INVENTION

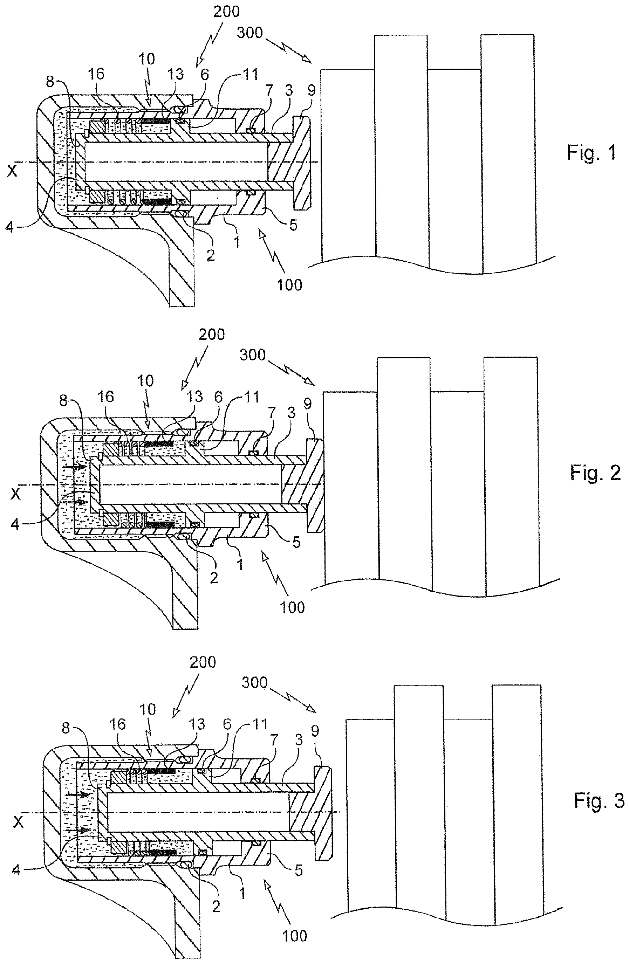

En référence à la figure 1, l'actionneur de freinage 100 de l'invention est destiné à être reçu dans l'une des cavités 200 d'une couronne d'un frein hydraulique d'aéronef, comportant par ailleurs des éléments de friction 300 comprenant une succession de disques rotors et de disques stators, par exemple des disques en carbone, sur lesquels l'actionneur exerce sélectivement un effort de freinage lors de l'admission de fluide sous pression (illustré par des points) dans la cavité 200.

L'actionneur 100 comporte tout d'abord une chemise 1 généralement cylindrique qui est reçue à étanchéité dans la cavité 200 de la couronne. A cet effet, un joint d'étanchéité 2 coopère avec une face externe de la chemise pour contenir le fluide hydraulique dans la cavité.

Un piston 3 est monté pour coulisser dans la chemise 1 selon un axe de coulissement X. A cet effet, le piston 3 comporte une protusion 11 conformée en palier qui s'étend à ajustement contre une face interne de la chemise 1 et qui reçoit un joint d'étanchéité 6. L'extrémité distale 5 de la chemise 1 est conformée en palier pour guider le piston 3. L'extrémité distale 5 de la chemise 1 est munie d'un racleur 7.

On remarquera que l'extrémité proximale 4 du piston 3 est ici fermée par une paroi 8 venue de matière avec le piston, de sorte à confiner le fluide hydraulique dans une zone éloignée des disques 300. L'extrémité distale du piston 3 reçoit un patin 9 pour exercer un appui contre les disques 300.

L'actionneur 100 est muni d'un dispositif de rattrapage d'usure qui, selon l'invention, s'étend entre la chemise 1 et le piston 3. Le dispositif de rattrapage d'usure 10 se réduit ici à une bague de friction 13 frottant contre la face interne de la chemise 1.

L'une des faces de la bague de friction 13 (tournée vers l'extrémité distale 5 de la chemise 1) sert de butée pour définir la position de retrait du piston 3. La position de retrait est définie par la venue au contact de la protusion 11 contre la bague de friction 13. L'autre des faces de la bague de friction 13 (tournée vers l'extrémité proximale 4 du piston 3) sert d'appui à un ressort 16 de rappel du piston 3 vers la position de retrait. Le ressort 16 agit donc directement sur la bague de friction 13.

Le fonctionnement de l'actionneur de freinage de l'invention est le suivant. Partant de la position de retrait illustrée à la figure 1, on applique un effort de freinage en admettant du fluide sous pression dans la cavité 200. Le fluide repousse le piston 3 vers les disques 300 à l'encontre de l'effort du ressort 16. Le piston 3 vient alors appliquer un effort de presse sur les disques 300, comme illustré à la figure 2.

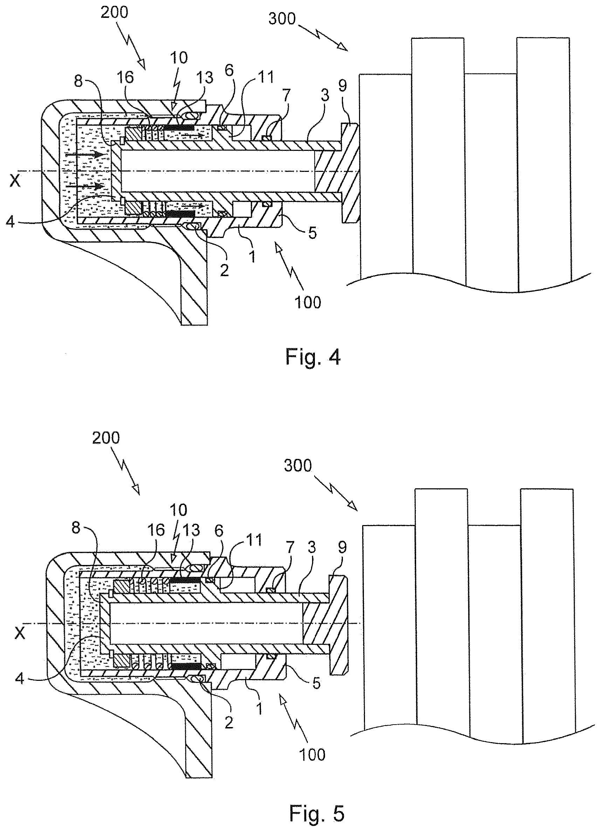

Cependant, Il se peut que la distance entre le patin 9 et les disques est plus grande que la course opérationnelle du piston 3. Dans cette situation, et comme illustré à la figure 3, avant de toucher les disques 300, le piston 3 provoque la compression du ressort 16 au point que ses spires deviennent jointives. Le ressort 16 se comporte comme un solide indéformable et pousse la bague de friction 13 à l'encontre de la friction qu'elle génère contre la chemise 1, jusqu'à contact du piston 3 avec les disques 300, comme illustré à la figure 4.

Puis, quand l'effort de freinage est relâché, le piston 3 recule sous l'effet du ressort 16, jusqu'à ce que le piston 3 vienne buter sur la face antagoniste de la bague de friction 13, comme illustré à la figure 5, définissant ainsi une nouvelle position de retrait, avancée par rapport à la précédente. La course opérationnelle du piston (entre la position de la figure 4 et la position de la figure 5) est inchangée, seule la position de retrait ayant légèrement avancé pour compenser l'usure des disques 300.

L'invention n'est pas limitée à ce qui vient d'être décrit, mais englobe au contraire toute variante entrant dans le cadre défini par les revendications. En particulier, bien que l'organe de friction qui constitue à lui tout seul la butée mobile soit ici une bague de friction, on pourra utiliser d'autres types d'organes de friction, comme un segment frottant spiralé, ou encore une succession de rondelles de frottement. Bien que l'organe élastique de rappel soit ici un ressort hélicoïdal, tout autre organe élastique pourra être utilisé, du moment qu'il présente lors de sa compression une augmentation d'effort suffisante pour pouvoir repousser la butée mobile au cas où le piston n'aurait pas touché les éléments de friction alors que sa course opérationnelle est déjà consommée.

## Revendications

1. Actionneur de freinage pour frein hydraulique d'aéronef, destiné à être rapporté dans l'une des cavités d'une couronne du frein, l'actionneur comprenant
- une chemise (1) adaptée à être reçue à étanchéité dans la cavité de la couronne ;
- un piston (3) monté à coulissement étanche dans la chemise selon un axe de coulissement (X) pour appliquer un effort de freinage sur des éléments de friction lors de l'introduction d'un fluide sous pression dans la cavité, et présentant une course opérationnelle déterminée ;
- un dispositif de rattrapage d'usure (10) qui définit une position de retrait du piston dans la chemise au moyen d'une butée mobile (13) pouvant être avancée par le piston lors de l'application d'un effort de freinage;
- un organe élastique (16) de rappel du piston vers la position de retrait prenant appui sur la butée mobile ;
**caractérisé en ce que** la butée mobile est réduite à un organe de friction (13) frottant contre la chemise, de sorte que l'une des faces de l'organe de friction sert de butée définissant la position de retrait du piston, et l'autre des faces sert d'appui à l'organe élastique de rappel, l'organe élastique présentant lors de sa compression une augmentation d'effort suffisante pour pouvoir repousser la butée mobile au cas où le piston ne touche pas les éléments de friction alors que sa course opérationnelle est déjà consommée.

2. Actionneur de freinage selon la revendication 1, dans lequel l'organe élastique est un ressort hélicoïdal (16) dont les spires deviennent jointives lors de l'application de l'effort de freinage si une course opérationnelle du piston est consommée avant que celui-ci ne touche les éléments de friction.

3. Actionneur de freinage selon la revendication 1, dans lequel piston a une extrémité proximale (4) fermée et étanche au fluide.

## Patentansprüche

1. Bremsaktor für eine Hydraulikbremse eines Luftfahrzeugs, der dazu bestimmt ist, in einen der Hohlräume eines Bremskranzes eingesetzt zu werden, wobei der Aktor umfasst:
- eine Buchse (1), die geeignet ist, in dem Hohlraum des Kranzes auf dichte Weise aufgenommen zu werden;
- einen Kolben (3), der in der Buchse entlang einer Verschiebungsachse (X) auf dichte Weise verschiebbar gelagert ist, um eine Bremskraft auf Reibelemente aufzubringen, wenn ein Druckfluid in den Hohlraum eingebracht wird, und der einen bestimmten Arbeitshub aufweist;
- eine Verschleißausgleichsvorrichtung (10), die eine Rückzugsposition des Kolbens in der Buchse mittels eines beweglichen Anschlags (13) definiert, der von dem Kolben während des Aufbringens einer Bremskraft vorgerückt werden kann;
- ein elastisches Rückstellelement (16) zum Rückstellen des Kolbens in die Rückzugsposition, das an dem beweglichen Anschlag anliegt;
**dadurch gekennzeichnet, dass** der bewegliche Anschlag auf ein Reibelement (13) beschränkt ist, das an der Buchse reibt, derart, dass eine der Flächen des Reibelements als Anschlag dient, der die Rückzugsposition des Kolbens definiert, und die andere der Flächen als Anlage für das elastische Rückstellelement dient, wobei das elastische Element während seiner Kompression eine Kraftzunahme aufweist, die ausreicht, um den beweglichen Anschlag in dem Fall, in dem der Kolben die Reibelemente nicht berührt, während sein Arbeitshub bereits aufgebraucht ist, zurückstoßen zu können.

2. Bremsaktor nach Anspruch 1, bei dem das elastische Element eine Schraubenfeder (16) ist, deren Windungen beim Aufbringen der Bremskraft aufeinandertreffen werden, wenn ein Arbeitshub des Kolbens verbraucht ist, ehe dieser die Reibelemente berührt.

3. Bremsaktor nach Anspruch 1, bei dem der Kolben ein proximales Ende (4) hat, das verschlossen und fluiddicht ist.

## Claims

1. Brake actuator for an aircraft hydraulic brake, which is intended to be added into one of the cavities of a brake ring, the actuator comprising
- a liner (1) designed to be housed sealingly in the cavity of the ring;
- a piston (3) mounted to slide sealingly in the liner along an axis of sliding (X) so as to apply a braking force on friction pads when a fluid is introduced under pressure into the cavity, and having a determined operational travel;
- a wear compensation device (10) which defines a position to which the piston retreats into the liner by means of a mobile stop (13) that can be moved forward by the piston as a braking force is applied;
- an elastic return member (16) returning the piston towards the retracted position bearing against the mobile stop;
**characterized in that** the mobile stop is reduced to a friction member (13) rubbing against the liner, such that one of the faces of the friction member serves as a stop defining the retracted position of the piston, and the other of the faces serves as a support for the elastic return member, the elastic member having, when compressed, a sufficient increase in force in order to be able to push back the mobile stop in the event that the piston is not in contact with the friction pads while its operational travel is already exhausted.

2. Brake actuator according to Claim 1, in which the elastic member is a helical spring (16) whose coils meet during application of the braking force if an operational travel of the piston is exhausted before the latter touches the friction pads.

3. Brake actuator according to Claim 1, in which the piston has a proximal end (4) that is closed and fluidtight.
